# EUROPEAN PATENT SPECIFICATION

(11) **EP 1 736 394 B1**
(45) Date of publication and mention of the grant of the patent: **17.10.2007**
(21) Application number: 04727027.7
(22) Date of filing: 13.04.2004
(51) Int. Cl.: B62D 1/04, B60R 21/20

(54) **MOTOR VEHICLE STEERING WHEEL COMPRISING A FIXED MODULE**
EIN FESTGELEGTES MODUL UMFASSENDES KRAFTFAHRZEUGLENKRAD
VOLANT D'AUTOMOBILE A MODULE FIXE

(43) Date of publication of application: 27.12.2006
(73) Proprietor: Dalphi Metal España, S.A., 28006 Madrid (ES)
(72) Inventor: BLANCO FERNANDEZ, Jorge, E-36213 Vigo, Pontevedra (ES); PEREZ BLANCO, Monica, E-36213 Vigo, Pontevedra (ES)
(74) Representative: Elzaburu Marquez, Alberto
(86) International application number: PCT/ES2004/070021
(87) International publication number: WO 2005/100128

(56) References cited:
- EP-A1- 1 323 617
- US-A- 2 795 641
- US-A- 4 541 301
- US-A- 4 572 313
- US-A- 4 604 912
- US-A- 5 461 200

## Description

### FIELD OF THE INVENTION

The present invention relates to a motor-vehicle steering wheel with fixed module and, more particularly, to an element thereof that supports the electric cables for the airbag and the control knobs or push-buttons located on said module.

### BACKGROUND OF THE INVENTION

In the present invention, motor-vehicle steering wheels with fixed module is understood to mean those steering wheels inside which there is a module that does not rotate together with the steering wheel and in which there is an airbag and a plurality of control knobs or push-buttons.

Steering wheels with fixed module make it possible to use optimized airbag shapes that are not symmetrical and that rely on knowledge of their initial position at the time of deployment, unlike that which occurs with steering wheels in which the module containing the airbag rotates together with the steering wheel, in which the airbag has to have a symmetrical shape as it may be deployed in a variety of positions.

The literature has proposed various solutions for a steering wheel with fixed module. One of these solutions, described in Patent Application EP 1 323 617 A1, aims to make it possible for the fixed module to rotate independently of the steering wheel and for this purpose uses a spring joined at one end to the fixed module and at the other to a wheel actuated by a motor.

Furthermore, it should be pointed out that there is an increasing tendency in the automotive industry to locate, on steering wheels, knobs or push-buttons for actuating or controlling a variety of devices. Such push-buttons are distributed on the fixed module so that they are convenient for the user, without adversely affecting requirements relating to proper driving of the vehicle.

Thus, for example, it is desirable to incorporate means in the steering wheel so that the driver of the vehicle can, without taking his or her hands off the steering wheel, operate control knobs or push-buttons for the radio or cassette unit or the CD player.

The presence, on the fixed module, of the airbag on the one hand and a plurality of control knobs or push-buttons on the other requires the relevant wiring inside the steering wheel from the relevant power source.

Patent application EP 1 323 617 A1 indicates that the electric wires may be located on the flat surface of the spring or grouped in the form of a multi-wire cable mounted along one of its edges.

A further motor-vehicle steering wheel according to the preamble of claim 1 is known from US 4 541 301.

This arrangement presents a number of drawbacks, which the present invention is aimed at solving.

### SUMMARY OF THE INVENTION

The present invention proposes a motor-vehicle steering wheel in which the element used to make the fixed module, where the airbag and the control push-buttons for various of the vehicle's devices are located, independent of the movement of the body of the steering wheel connected to the steering column is a plastic helical body that has a metal spring inserted inside it and a groove for locating the cables on the outer part of said body.

On the one hand, this configuration gives a very efficient transmission of the wiring to the fixed module and, on the other, simplifies assembly operations.

Other characteristics and advantages of the present invention will become apparent from the following detailed description of an entirely non-limiting illustrative embodiment of its subject matter, with reference to the appended drawings.

### DESCRIPTION OF THE FIGURES

Figure 1 is a diagrammatic view in transverse section of a motor-vehicle steering wheel according to the invention.
Figure 2 is a view in transverse section of the cable-carrying body with inserted spring in a first embodiment of the invention.
Figure 3 is an expanded view of a section of said body.
Figure 4 is a view in transverse section of the cable-carrying body with inserted spring in a second embodiment of the invention.
Figure 5 is an expanded view of a section of said body.
Figure 6 is a perspective view of the cables that may be located in the cable-carrying body.

### DETAILED DESCRIPTION OF THE INVENTION

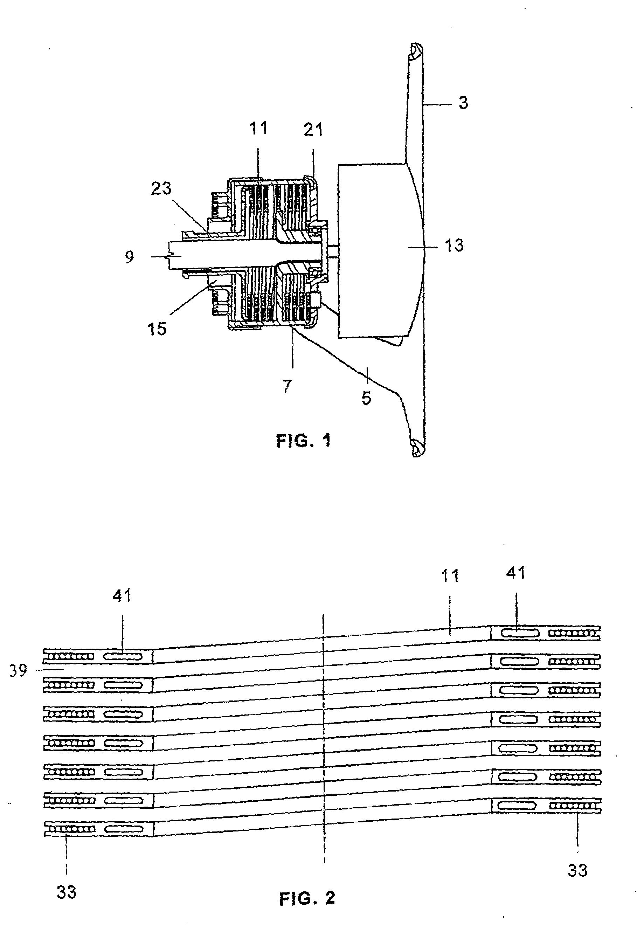

As shown in Figure 1, the motor-vehicle steering wheel with fixed module according to the present invention comprises a steering-wheel body formed by a circular ring 3, a number of radii 5 and a central part 7 that rotates together with the steering column 9. The steering wheel includes, in its inside, a module 13 where there is an airbag (not shown) and in which a plurality of control knobs are arranged (not shown).

The module 13 does not rotate together with the steering wheel as it is linked to a helical body with an inserted spring 11 that is attached via its upper part to the plate 21 supporting the module 13 and via its lower part to the plate 23 joined to the vehicle structure.

For the purposes of the present invention, it is unimportant whether the helical body 11 is connected directly in a fixed manner to the vehicle structure, such that the position of the module 13 is invariable, or by means of a rotation device, as is the case of patent application EP 1 323 617 A1, so that it is possible to rotate the module 13 in a predetermined manner with respect to the rotation of the steering-wheel body.

As may be seen in Figure 1, the central part 7 of the steering-wheel body is located between two turns of the helical body with inserted spring 11.

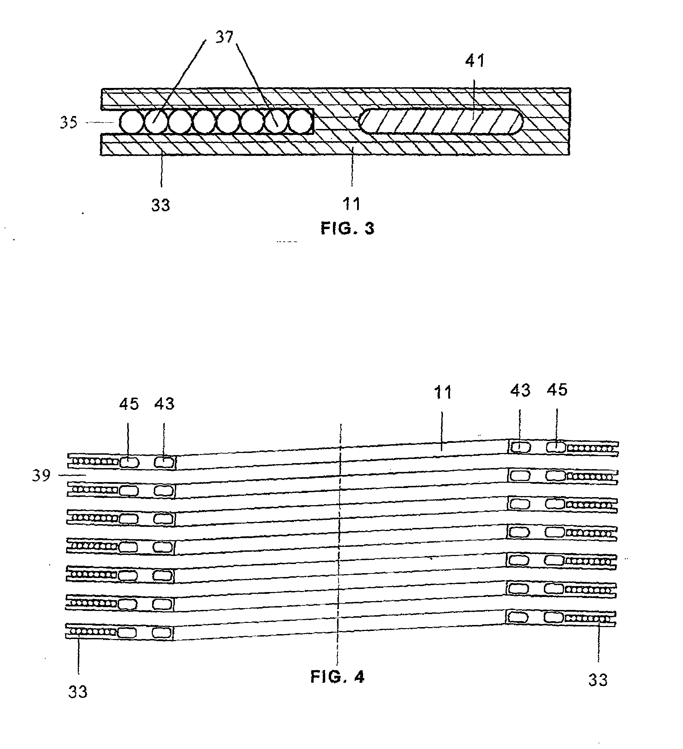

As shown in Figures 2 and 3, the plastic helical body 11 has a spring 41 inserted inside it and its outer part 33 has an inner groove 35 for housing a plurality of cables 37. The helical body 11 has a transverse section of flattened rectangular shape, there being a space 39 between its turns.

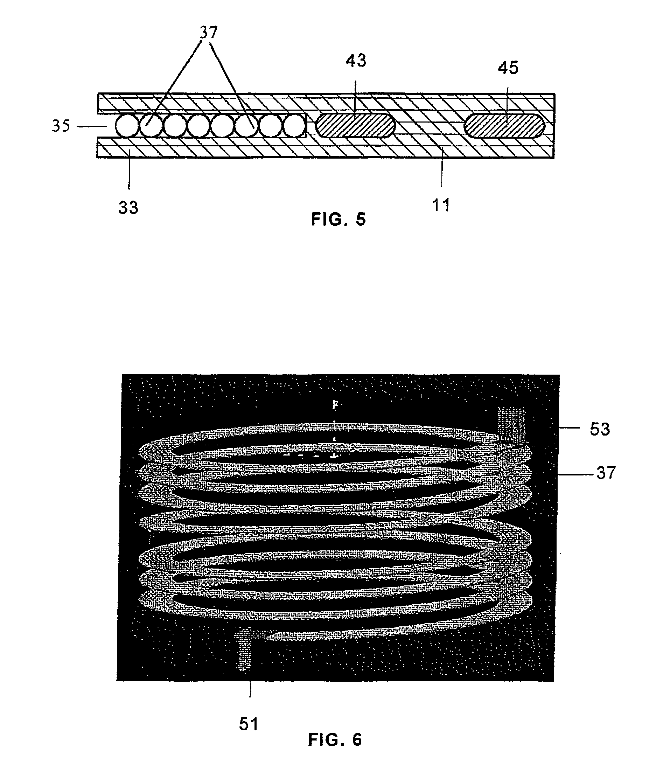

Figures 4 and 5 show a second embodiment in which two springs 43, 45 are used.

The helical body 11 will preferably be produced by means of an over-injection of plastic onto a metal coil 41 or onto two metal coils 43, 45. The cables are then introduced into it along the groove 35.

As illustrated in Figure 6, the cables 37 should have a spiral configuration and for this purpose use may be made of flat single cables, coiled cables or round single cables.

In a typical embodiment, the wiring comprises 8 wires, 4 for the airbag and 4 for signalling.

Once the cables 37 have been arranged inside the body 11, the connections are made with the relevant connector elements 51, 53.

In order that the cables 37 do not emerge from the groove 35, a flexible sealing element that does not impede the movement of the spring may be applied.

Although the invention has been described and represented in detail, it is obvious that changes included within its scope may be introduced into it, and it should not be considered to be limited to said embodiment but to the content of the following claims:

## Claims

1. Motor-vehicle steering-wheel assembly coupled to the steering column of the vehicle, comprising a helical spring device (41; 43, 45) in order to hold fixed a module (13) located inside the steering wheel, in which there are an airbag and a plurality of control knobs or push-buttons, **characterized in that** said helical spring device (41; 43, 45) is inserted inside a plastic helical body (11) that includes a groove (35) in its outer part for locating the cables (37) needed to provide the electrical connection to the devices located in the module (13).

2. Motor-vehicle steering-wheel assembly according to Claim 1, **characterized in that** the helical body (11) has a transverse section of flattened rectangular shape.

3. Motor-vehicle steering-wheel assembly according to Claim 2, **characterized in that** the helical spring device consists of a single metal coil (41).

4. Motor-vehicle steering-wheel assembly according to Claim 2, **characterized in that** the helical spring device consists of two metal coils (43, 45) arranged in parallel.

## Patentansprüche

1. Kraftfahrzeug-Lenkradanordnung, die mit der Lenksäule des Fahrzeugs verbunden ist, mit einer wendelförmigen Federvorrichtung (41; 43, 45), um ein innerhalb des Lenkrades angeordnetes Modul (13) festzuhalten, in welchem sich ein Airbag und mehrere Steuerknöpfe oder Drucktasten befinden, **dadurch gekennzeichnet, dass** die wendelförmige Federvorrichtung (41; 43, 45) in einen Kunststoffwendelkörper (11) eingesetzt ist, der eine Nut (35) in seinem äu-ßeren Abschnitt zur Festlegung der Kabel (37) enthält, die zur Bereitstellung der elektrischen Verbindung zu den in dem Modul (13) untergebrachten Vorrichtungen benötigt werden.

2. Kraftfahrzeug-Lenkradanordnung nach Anspruch 1, **dadurch gekennzeichnet, dass** der Wendelkörper (11) einen Querschnitt mit abgeflachter rechteckiger Form aufweist.

3. Kraftfahrzeug-Lenkradanordnung nach Anspruch 2, **dadurch gekennzeichnet, dass** die Wendelfedervorrichtung aus nur einer Metallspule (41) besteht.

4. Kraftfahrzeug-Lenkradanordnung nach Anspruch 2, **dadurch gekennzeichnet, dass** die Wendelfedervorrichtung aus zwei Metallspulen (43, 45) in paralleler Anordnung besteht.

## Revendications

1. Ensemble de volant de véhicule à moteur couplé à la colonne de direction du véhicule, comprenant un dispositif de ressort hélicoïdal (41 ; 43, 45) destiné à maintenir fixe un module (13) situé à l'intérieur du volant, dans lequel se trouvent un airbag et une pluralité de boutons de commande ou de boutons-poussoirs, **caractérisé en ce que** ledit dispositif de ressort hélicoïdal (41 ; 43, 45) est inséré à l'intérieur d'un corps hélicoïdal en plastique (11) qui comprend une rainure (35) dans sa partie externe destinée à placer les câbles (37) nécessaires pour assurer la connexion électrique avec les dispositifs situés dans le module (13).

2. Ensemble de volant de véhicule à moteur selon la revendication 1, **caractérisé en ce que** le corps hélicoïdal (11) possède une section transversale ayant une forme rectangulaire plate.

3. Ensemble de volant de véhicule à moteur selon la revendication 2, **caractérisé en ce que** le dispositif de ressort hélicoïdal se compose d'une seule bobine métallique (41).

4. Ensemble de volant de véhicule à moteur selon la revendication 2, **caractérisé en ce que** le dispositif de ressort hélicoïdal se compose de deux bobines métalliques (43, 45) agencées en parallèle.
